# EUROPEAN PATENT APPLICATION

(11) **EP 2 128 737 A1**
(43) Date of publication of application: **02.12.2009**
(21) Application number: 08722568.6
(22) Date of filing: 21.03.2008
(51) Int. Cl.: G05G 1/30, B60K 26/02, B60T 7/06

(54) **PEDAL FOR VEHICLE**

(30) Priority: 29.03.2007 JP 2007086527
(71) Applicant: Infec Corporation, Utsunomiya-shi, Tochigi 321-3222 (JP); Honda Giken Kogyo Kabushiki Kaisha, Tokyo 107-0062 (JP)
(72) Inventor: FUJITA, Yoshihide, Utsunomiya-shi Tochigi 321-3222 (JP); KANNO, Fumio, Utsunomiya-shi Tochigi 321-3222 (JP); MINAGAWA, Takao, Utsunomiya-shi Tochigi 321-3222 (JP); TAKAI, Shinichi, Wako-shi Saitama 351-0113 (JP); SASAKI, Takuro, Wako-shi Saitama 351-0113 (JP)
(74) Representative: Haley, Stephen
(86) International application number: PCT/JP2008/055204
(87) International publication number: WO 2008/120586

(57) **Abstract**

Stepping force can be transmitted effectively from a pad member to an arm member even when a stepping operation by the foot of an operator is performed at a position shifted in a lateral direction from the center position of the pad member in the lateral direction. The body of a brake pedal (20) that is a pedal for vehicle is formed of an arm member (21) rotatable vertically about a center shaft arranged in a proximal end portion (21A), and a pad member (22) to which a stepping operation by the foot of an operator is performed is attached to an end face (21C) of a distal end (21B) of the arm member (21). The arm member (21) is made of a pipe, and an end face (21C) of the arm member (21) to which the pad member (22) is attached has a laterally long shape.

## Description

### Technical Field

The present invention relates to a pedal for vehicle, and particularly relates to a pedal for vehicle with an arm member made of a pipe forming the body of the pedal, and can be used for, for example, a brake pedal, a clutch pedal, or an accelerator pedal.

### Background Art

A brake pedal as a pedal for vehicle, which is mounted in a vehicle and on which a stepping operation is performed by the foot of an operator, includes an arm member vertically rotatable about a center shaft arranged in a proximal end portion, and a pad member which is attached to an end face of a distal end of this arm member forming the body of the pedal and on which a stepping operation is performed by the foot of an operator. Patent Documents 1 to 4 described below disclose a brake pedal having an arm member made of a pipe. Having the arm member made of a pipe allows to reduce the weight of the brake pedal more than when the arm member is formed of a thick plate, and thereby allows to reduce the weight of the vehicle, while ensuring the necessary strength of the body of the pedal.
Patent Document 1: Japanese Patent Application Laid-open No. H10-264784 (paragraph 0019, FIG 4)
Patent Document 2: Japanese Patent Application Laid-open No. H11-78817
Patent Document 3: Japanese Patent Application Laid-open No. 2001-287629
Patent Document 4: WO 2006/106622 A1

### Disclosure of Invention

When an operator performs a stepping operation on the brake pedal with a foot, it cannot be said that this stepping operation is always performed at a center position in a lateral direction of the pad member. It is possible that the stepping operation is performed at a position shifted in the lateral direction, that is, in a left and right direction from this center position.

An object of the present invention is to provide a pedal for vehicle capable of effectively transmitting stepping force from the pad member to the arm member, even when the stepping operation by the foot of an operator is performed at a position shifted in the lateral direction from the center position of the pad member in the lateral direction.

A pedal for vehicle according to the present invention includes an arm member vertically rotatable about a center shaft arranged in a proximal end portion and a pad member attached to an end face of a distal end of the arm member, the arm member being made of a pipe, in which the end face to which the pad member is attached has a laterally long shape.

With the pedal for vehicle according to the present invention, since the end face of the distal end of the arm member to which the pad member is attached has a laterally long shape, stepping force can be transmitted effectively from the pad member to the arm member even when a stepping operation by the foot of an operator is performed at a position shifted in the lateral direction from the center position of the pad member in the lateral direction.

Further, since the pad member is attached to the end face of the distal end of the arm member having a laterally long shape, an attaching width of the pad member in the lateral direction on the arm member can be made large, and the pad member can be attached to the arm member with high strength. Thus, the thickness of the pad member can be reduced, which allows reduction in weight of the entire pedal for vehicle and further allows reduction in vehicle weight.

Furthermore, when an operator performs a stepping operation on the pedal for vehicle with the footwear item worn on the operator's foot, a tip of the footwear item gets closer to the vicinity of the distal end of the arm member as this stepping stroke becomes longer. However, the end face of the distal end of the arm member to which the pad member is attached has a laterally long shape, and a shape of the cross section orthogonal to the axis of the arm member in the vicinity of the distal end is also a laterally long shape. Thus, when the stepping stroke of the pedal for vehicle becomes long, interference of the tip of the footwear item with the vicinity of the distal end of the arm member can be eliminated.

According to the present invention, attaching of the pad member to the end face of the distal end of the arm member may be performed in a state that a center position of the end face in a lateral direction matches or substantially matches a center position of the pad member in the lateral direction, or that a shift amount in the lateral direction exists between these center positions from each other.

When these center positions match or substantially match each other, stepping force can be transmitted effectively from the pad member to the arm member even when the stepping operation by the foot of an operator is performed at a position shifted to either side in the lateral direction from the center position of the pad member in the lateral direction, in other words, shifted to either a right side or a left side in a left and right direction.

Note that the aforementioned "substantially match" means that there may be a certain level of error in attachment position of the pad member attached to an end face of the distal end of the arm member.

Further, attaching of the pad member to the end face of the distal end of the arm member may be performed by coupling the pad member to the entire circumference of this end face or by providing a gap between a part of an entire circumference of the end face and the pad member and coupling the pad member to the remaining portion of the entire circumference of the end face.

By the latter, since the arm member is made of a pipe having a hollow portion inside and this hollow portion is continuous across the entire length of the arm member, the hollow portion is open by the gap at both end portions of the arm member in the length direction even after the pad member is attached to the end face of the distal end of the arm member. Accordingly, when the pedal for vehicle is immersed in an electropaint for electropainting the pedal for vehicle, the electropaint can enter the inside of the arm member and be distributed therein securely, and this allows to electropaint the entire inner face of the arm member.

Further, when attaching of the pad member to the end face of the distal end of the arm member is performed while providing the gap between a part of the entire circumference of the end face and the pad member as described above, it is preferable that the gap is provided between a lower side portion of the entire circumference of the end face and a portion of the pad member that faces the lower side portion.

Accordingly, if dew condensation occurs in the arm member when the pedal for vehicle is attached in a vehicle, water due to this dew condensation can be allowed to flow out securely through the lower side portion of the end face of the distal end of the arm member. Thus, rusting on the inner face of the arm member made of steel can be prevented.

Further, when the gap is provided between a part of the entire circumference of the end face and the pad member as described above, this gap can be formed in any mode.

A first mode is that a shape of the end face of the distal end of the arm member is a cut shape when the arm member is produced, which is given a desired length by cutting a material for arm member.

Accordingly, when the arm member is produced by cutting the material for arm member, the aforementioned end face which allows to provide the gap from the pad member can be formed simultaneously. Thus the production work of the arm member can be simplified.

Further, a second mode is that a recessed portion recessed toward a side opposite to the arm member is formed in the pad member, and the gap is formed by the recessed portion by arranging the part of the entire circumference of the end face in this recessed portion.

When the recessed portion recessed toward a side opposite to the arm member is thus formed in the pad member, a protruding portion protruding toward a side of the arm member may be formed on the pad member, the recessed portion being a portion recessed toward the side opposite to the arm member with respect to the protruding portion, and a portion excluding the part of the entire circumference of the end face may be coupled to the protruding portion.

Further, when the protruding portion protruding toward a side of the arm member is thus formed in the pad member and the pad member is formed by press forming a plate material, the protruding portion may be a reinforcement portion of the pad member.

Accordingly, the recessed portion can be formed simultaneously when the pad member and the protruding portion to be the reinforcement portion of the pad member are formed by press forming a plate material, and thus the work to provide the above-described gap between the part of the entire circumference of the end face and the pad member can be performed easily by the press forming.

In addition, attaching of the pad member to the end face of the distal end of the arm member by providing the gap between a part of an entire circumference of the end face and the pad member as described above can be performed also when the end face of the distal end of the arm member to which the pad member is attached does not have the laterally long shape.

Further, it is preferable that a shape of a cross section orthogonal to an axis of the arm member in the proximal end portion of the arm member is a shape elongated in a direction orthogonal to a lateral direction.

When a stepping operation is performed on the pad member by the foot of an operator, a bending moment due to the stepping force operates on the arm member, and this bending moment becomes maximum at the proximal end portion of the arm member in which the center shaft is arranged, which is the center of rotation of the arm member. However, with the arrangement that the shape of a cross section orthogonal to the axis of the arm member in this proximal end portion is a shape elongated in a direction orthogonal to the lateral direction as described above, the arm member has high strength against the aforementioned bending moment.

Furthermore, the present invention can be applied to a pedal for vehicle in which a position of the distal end of the arm member is not offset in a lateral direction from a position of the proximal end portion of the arm member, and can also be applied to a pedal for vehicle having an offset amount of offsetting a position of the distal end of the arm member in a lateral direction from a position of the proximal end portion of the arm member.

When the pedal for vehicle according to the present invention is the pedal for vehicle having the offset amount and a middle portion between the proximal end portion and the distal end of the arm member is inserted in a coupling member having a substantially C shape provided on an end portion of a rod and is coupled to the coupling member, it is preferable that the arm member has a projecting portion projecting from the coupling member in a cross section orthogonal to an axis of the arm member in the middle portion, and the projecting portion has a dimension in the lateral direction larger than a portion of the arm member inserted in the coupling member.

When the pedal for vehicle has the offset amount, a twisting moment based on the offset amount operates on the arm member when a stepping operation is performed on the pad member by the foot of an operator. However, with the arrangement that the arm member has a projecting portion projecting from the coupling member in a cross section orthogonal to an axis of the arm member in the middle portion and the projecting portion has a dimension in the lateral direction larger than a portion of the arm member inserted in the coupling member as described above, high strength against the twisting moment can be given by the projecting portion to the arm member.

In addition, giving high strength against the twisting moment by the projecting portion to the arm member in this manner can be performed also when the end face of the distal end of the arm member to which the pad member is attached does not have the laterally long shape.

Further, when a portion of an entire length of the arm member including at least the distal end is a curved portion projecting in a curved manner to a side of an operator, this curved portion may be formed as a curved shape portion that curves sequentially with a single radius of curvature. Alternatively, the curved portion may be formed by providing a plurality of curved shape portions having different radii of curvature in a length direction of the arm member, and the radius of curvature of a curved shape portion in a vicinity of the distal end including the distal end may be smallest among the respective radii of curvature of the plurality of curved shape portions.

With the latter, since the radius of curvature of the curved shape portion in the vicinity of the distal end including the distal end is smallest among the respective radii of curvature of the plurality of curved shape portions, the position of the pad member attached to the end face of the distal end projects largely to the side of an operator. Therefore, even when the operator places a footwear item on the pad member in a state that the tip of the footwear item worn on the foot of the operator is projected forward from the pad member for performing a stepping operation on the pedal for vehicle with large force, it is possible to prevent the tip of the footwear item from contacting the arm member. In other words, with the arrangement that the radius of curvature of the curved shape portion of the vicinity of the distal end including the distal end is smallest among the respective radii of curvature of the plurality of curved shape portions, the space for eliminating interference of the tip of the footwear item with the arm member can be secured on an upper forward side of the pad member.

In addition, such an arrangement that the radius of curvature of the curved shape portion of the vicinity of the distal end including the distal end is smallest among the respective radii of curvature of the plurality of curved shape portions can be performed also when the end face of the distal end of the arm member to which the pad member is attached does not have the laterally long shape.

Furthermore, the entire outer face of the arm member made of a pipe as described above may be a curved face, or a part of the entire outer face may be a flat outer face portion, which is a flat face.

When the arm member has a flat outer face portion like the latter, a bracket to which an end portion of a return spring is coupled may be coupled to the flat outer face portion.

Accordingly, since the bracket can be coupled to the arm member using the flat outer face portion, the shape of the bracket can be simplified, and a coupling work of the bracket to the arm member can be performed easily.

In addition, coupling of a bracket to which an end portion of a return spring is coupled to the flat outer face portion of the arm member in this manner can be performed also when the end face of the distal end of the arm member to which the pad member is attached does not have the laterally long shape.

In the present invention, the pipe for forming the arm member may be a drawn pipe or an extruded pipe formed by drawing processing or extrusion processing of a material, in other words, a seamless pipe in which no seam welded portion exists across the entire circumference in a circumferential direction, or may be a seam welded pipe in which a seam welded portion exists at one position in a circumferential direction.

When the arm member is made of a seam welded pipe, it is desirable that a position of the seam welded portion is a position excluding a position in a direction orthogonal to a lateral direction in a cross section orthogonal to an axis of the arm member.

This is because the bending moment operating on the arm member when a stepping operation is performed on the pad member by the foot of an operator becomes large tensile force or compression force and operates on the arm member at a position in a direction orthogonal to the lateral direction in the cross section orthogonal to the axis of the arm member. Accordingly, with the arrangement that the position of the seam welded portion is at the position excluding a position in the direction orthogonal to the lateral direction in the cross section orthogonal to the axis of the arm member, it is possible to prevent the large tensile force or compression force from operating on the seam welded portion.

When the position of the seam welded portion is a position on a lateral side or a position close to this position in the cross section orthogonal to the axis of the arm member, the magnitudes of the tensile force and compression force become zero or small at these positions. Thus, the load to operate on the seam welded portion based on the bending moment can be eliminated or reduced.

In addition, such an arrangement that the position of the seam welded portion is a position on a lateral side or a position close to this position in the cross section orthogonal to the axis of the arm member can be performed also when the end face of the distal end of the arm member to which the pad member is attached does not have the laterally long shape.

Further, when a coupling member arranged crossing the seam welded portion is coupled to the arm member, it is preferable that a coupling portion of the coupling member and the arm member is provided on both sides of the seam welded portion.

Accordingly, portions on the both sides of the seam welded portion on the arm member are coupled via the coupling member, and with this coupling the strength of the arm member made of a seam welded pipe can be improved.

In addition, the coupling portion of the coupling member provided on the both sides of the seam welded portion and the arm member may either be formed by welding or be formed of retainers such as screws or rivets.

Further, the type of the coupling member may be an arbitrary one as long as it is a member to be coupled to the arm member. A first example of the coupling member is a pipe member in which the center shaft forming the center of rotation of the arm member is inserted, and a second example is a bracket to which an end portion of a return spring is coupled.

When the coupling member arranged crossing the seam welded portion is coupled to the arm member as described above, providing this coupling portion of the coupling member and the arm member on the both sides of the seam welded portion can be performed also when the end face of the distal end of the arm member to which the pad member is attached does not have the laterally long shape.

Further, when the arm member is formed by performing a process of bending in a vertical direction or a substantially vertical direction a material for arm member made of a seam welded pipe, in which a seam welded portion exists at one position in a circumferential direction, it is preferable that the position of the seam welded portion is a position on a lateral side or a position close to this position in the cross section orthogonal to the axis of the material for arm member in a portion of the material for arm member to be bent in a vertical direction or a substantially vertical direction.

Accordingly, when a process to bend the material for arm member in a vertical direction or a substantially vertical direction is performed, it is possible to prevent the large tensile force or compression force due to this bending process from operating on the seam welded portion, and thereby the bending process of the material for arm member can be performed in a predetermined way.

In addition, such an arrangement that the position of the seam welded portion is a position on a lateral side or a position close to this position in the cross section orthogonal to the axis of the material for arm member in a portion of the material for arm member to be bent in a vertical direction or a substantially vertical direction can be performed also when the end face of the distal end of the arm member to which the pad member is attached does not have the laterally long shape.

Furthermore, when a middle portion between the proximal end portion and the distal end of the arm member is inserted in a coupling member having a substantially C shape provided on an end portion of a rod, a bush member is penetrated through and fixed in the middle portion, and a pin coupling the arm member and the coupling member is inserted in the bush member, it is preferable that depressed portions having a ring shape depressed in an outside diameter direction are formed in both end portions in a length direction of the bush member in an inner face of the bush member facing the pin.

When a stepping operation is performed on the pad member by the foot of an operator, a twisting moment operates on the arm member if this stepping operation is not performed at the center of the end face of the distal end of the arm member but is performed at a position shifted in either leftward or rightward from this center. Further, also when the pedal for vehicle has the above-described offset amount, a twisting moment operates on the arm member by a stepping operation on the pad member. However, as described above, since the depressed portions having a ring shape depressed in an outside diameter direction are formed in both end portions in a length direction of the bush member in an inner face of the bush member facing the pin, occurrence of a displacement is allowed in a twisting direction of the arm member between the pin and the bush member. Thus, even when the twisting moment operates on the arm member, the stepping force form the arm member can be transmitted as pressing force to the rod via the bush member, the pin, and the coupling member having a substantially C shape.

In addition, forming of the depressed portions having a ring shape depressed in an outside diameter direction in both end portions in a length direction of the bush member in an inner face of the bush member facing the pin in this manner can be performed also when the end face of the distal end of the arm member to which the pad member is attached does not have the laterally long shape.

The pedal for vehicle according to the present invention as has been described above may be a brake pedal, a clutch pedal, or an accelerator pedal. That is, the present invention can be applied to a brake pedal, and can also be applied to a clutch pedal and an accelerator pedal. Further, the brake pedal may be a brake pedal for braking used for braking a traveling vehicle, or may be a brake pedal for parking used for parking a stopped vehicle.

Further, in the present invention the material of the arm member may be any one, and this material may be steel, aluminum or aluminum alloy, stainless steel, or the like.

### Effect of the Invention

According to the present invention, it is possible to obtain an effect that, with an end face of a distal end of an arm member to which a pad member is attached being a laterally long shape, stepping force can be transmitted effectively from the pad member to the arm member, even when the stepping operation by the foot of an operator is performed at a position shifted in a lateral direction from the center position of the pad member in the lateral direction.

### Brief Description of Drawings

FIG 1 is a plan view of a vehicle showing the vicinity in which a brake pedal that is a pedal for vehicle according to an embodiment of the present invention is arranged;
FIG 2 is a right side view of FIG 1;
FIG 3 is a front view of the brake pedal shown in FIG 1 and FIG 2;
FIG 4 is a right side view of the brake pedal shown in FIG 1 and FIG 2;
FIG 5 is a cross-sectional view taken along a line S5-S5 in FIG 4;
FIG 6 is a cross-sectional view taken along a line S6-S6 in FIG 4;
FIG 7 is a cross-sectional view taken along a line S7-S7 in FIG 4;
FIG 8 is a cross-sectional view taken along a line S8-S8 in FIG 4;
FIG 9 is a cross-sectional view taken along a line S9-S9 in FIG 4;
FIG 10 is a cross-sectional view taken along a line S10-S10 in FIG 4 excluding the pad member;
FIG 11 is a side view looking the arm member just after produced from a material for arm member from the left side;
FIG 12 is a view showing process steps for producing the arm member from the material for arm member;
FIG 13 is a right side view showing the brake pedal when mounted in a vehicle;
FIG 14 is a cross-sectional view taken along a line S14-S14 in FIG 13;
FIG 15 is a cross-sectional view taken along a line S15-S15 in FIG 3;
FIG 16 is a side view looking a brake pedal according to a first different embodiment from the left side;
FIG 17 is a rear view showing a pad member of a brake pedal according to a second different embodiment;
FIG 18 is a cross-sectional view taken along a line S18-S18 in FIG 17;
FIG 19 is a cross-sectional view taken along a line S19-S19 in FIG 17;
FIG 20 is a view similar to FIG 15 showing the brake pedal according to the second different embodiment; and
FIG 21 is a view similar to FIG 14 showing the brake pedal according to the third different embodiment.

### Explanation of Numerals and Symbols

- 7: push rod
- 8: coupling member having a substantially C shape
- 9: pin
- 10: return spring
- 20, 120, 220, 320: brake pedal that is a pedal for vehicle
- 21, 221, 321: arm member
- 21A: proximal end portion
- 21B, 221B: distal end
- 21C, 221C: end face
- 21D: middle portion
- 21E, 221E: lower side portion
- 22, 222: pad member
- 23: pipe member
- 24: center shaft
- 25: bracket
- 26: flat outer face portion
- 29,329: bush member
- 30: curved portion
- 30A, 30B, 30C: curved shape portion
- 31: seam welded portion
- 32: projecting portion
- 329A: recessed portion having a ring shape
- A: offset amount
- B: axis of arm member
- C: dimension of a projecting portion in a lateral direction
- E: center position of pad member in a lateral direction
- R1, R2, R3: radius of curvature
- S1, S2: gap

### Best Mode for Carrying Out the Invention

Hereinafter, embodiments for carrying out the present invention will be explained based on the drawings. A pedal for vehicle according to this embodiment is a brake pedal 20 for braking used for braking a traveling vehicle.

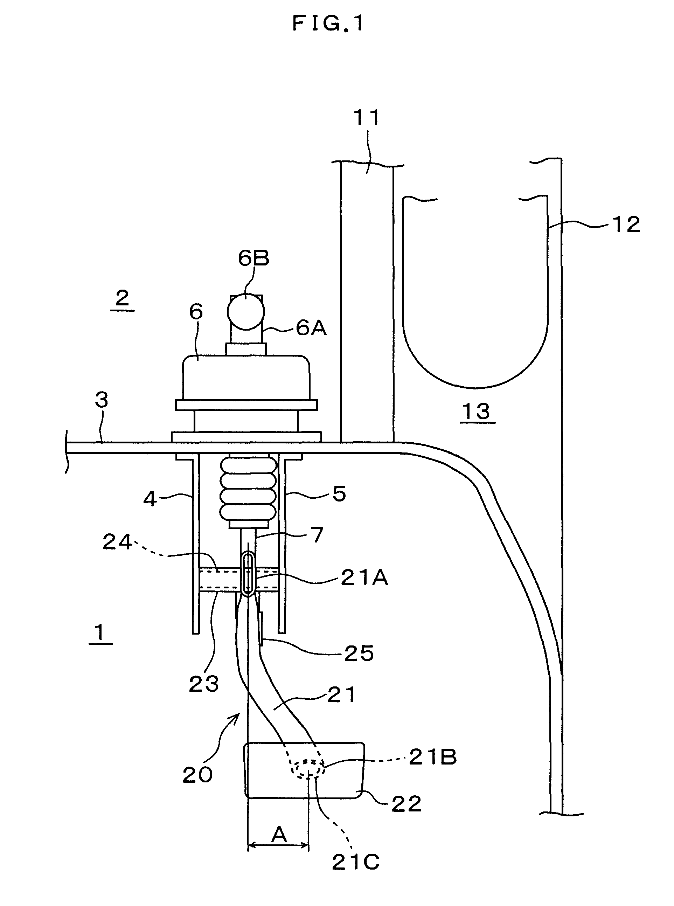

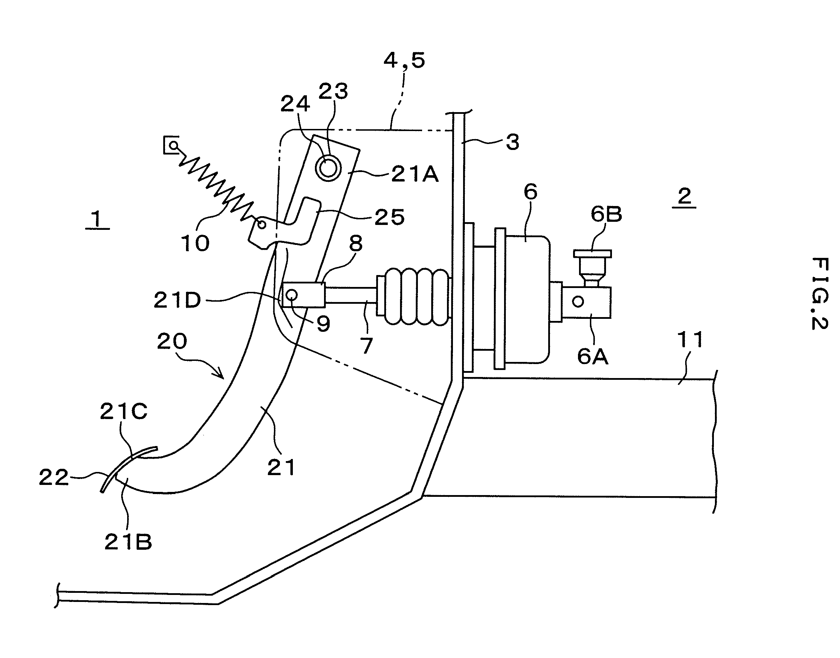

FIG 1 is a plan view showing the vicinity of the arrangement position of the brake pedal 20 for braking in a vehicle, and FIG 2 is a right side view of the vicinity of this arrangement position. The brake pedal 20 includes an arm member 21 forming the body of the brake pedal 20 and a pad member 22 on which a stepping operation is performed by the foot of an operator. A pipe member 23 extending in a lateral direction, in other words, a left and right direction is penetrated through and fixed in a proximal end portion 21A of the arm member 21, and the arm member 21 is rotatable vertically about a center shaft 24 inserted through the inside of the pipe member 23. The pad member 22 made of metal is attached by welding to an end face 21C of a distal end 21B of the arm member 21 made of a steel pipe.

Brackets 4, 5 are attached to a face on the side of a vehicle inside space 1 of a dashboard panel 3, which partitions the vehicle inside space 1 and an engine room 2 in the vehicle, and the center shaft 24 is provided across these brackets 4, 5. On a face on the side of the engine room 2 of the dashboard panel 3, a brake booster 6 including a master cylinder 6A and a reservoir tank 6B is attached. As shown in FIG 2, to a middle portion 21D between the proximal end portion 21A and the distal end 21B of the arm member 21, a coupling member 8 having a substantially C shape coupled to an end portion of a push rod 7 extending toward the brake booster 6 is coupled with a pin 9. By rotation of the arm member 21 about the center shaft 24 by a stepping operation on the pad member 22, the push rod 7 is pressed onto the side of the brake booster 6, and thereby the brake booster 6 generates braking force for braking the traveling vehicle.

As shown in FIG 2, a bracket 25 is attached to the arm member 21, and coupled to this bracket 25 is an end portion of a return spring 10 for allowing the brake pedal 20, which is rotated by a stepping operation on the pad member 22, to rotate and return to the initial position. Incidentally, the bracket 25 may be made to function also as a member for actuating a sensor detecting a stepping operation performed on the brake pedal 20.

As shown in FIG 1, the engine room 2 is partitioned by a front side frame 11 in the lateral direction from a wheel space 13 in which a front wheel 12 is arranged, and the dimension in the lateral direction of the vehicle inside space 1 is the same or substantially the same as the dimension in the lateral direction obtained by summing those of the engine room 2 and the wheel space 13. Accordingly, due to the relationship between such a dimension in the lateral direction of the vehicle inside space 1 and the arrangement position of the brake booster 6 in the engine room 2, the brake pedal 20 has an offset amount A of offsetting the position of the distal end 21B in the lateral direction from the position of the proximal end portion 21A of the arm member 21.

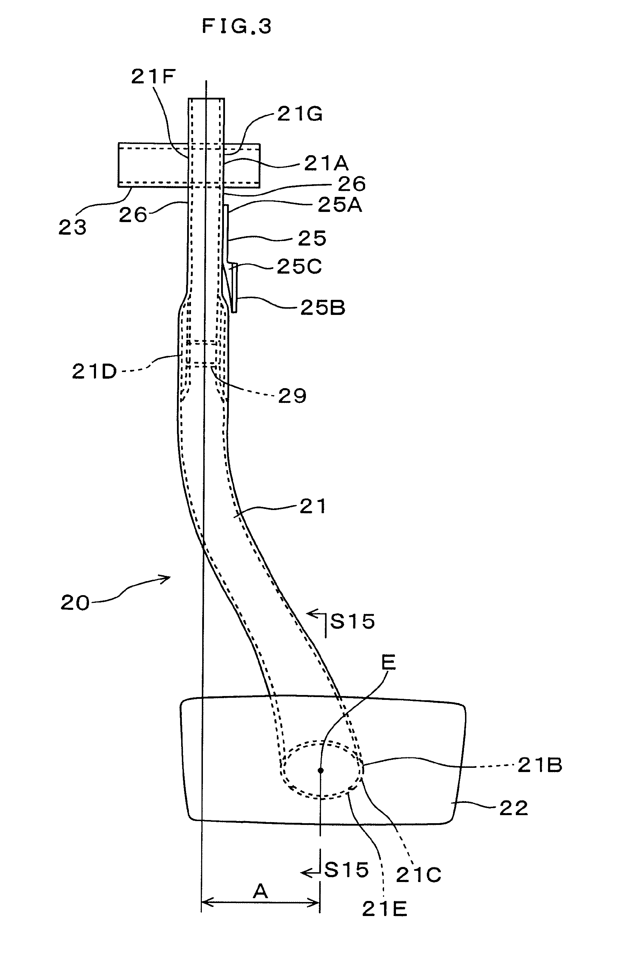

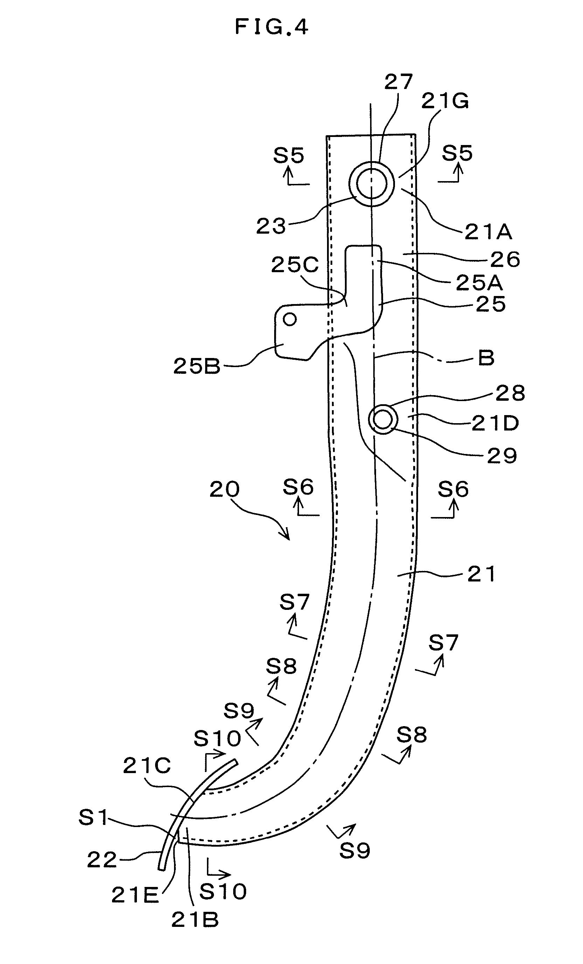

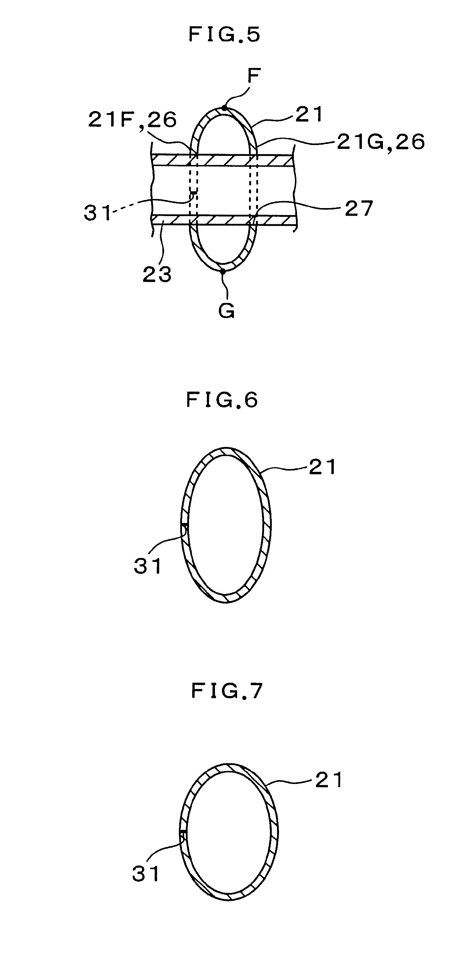

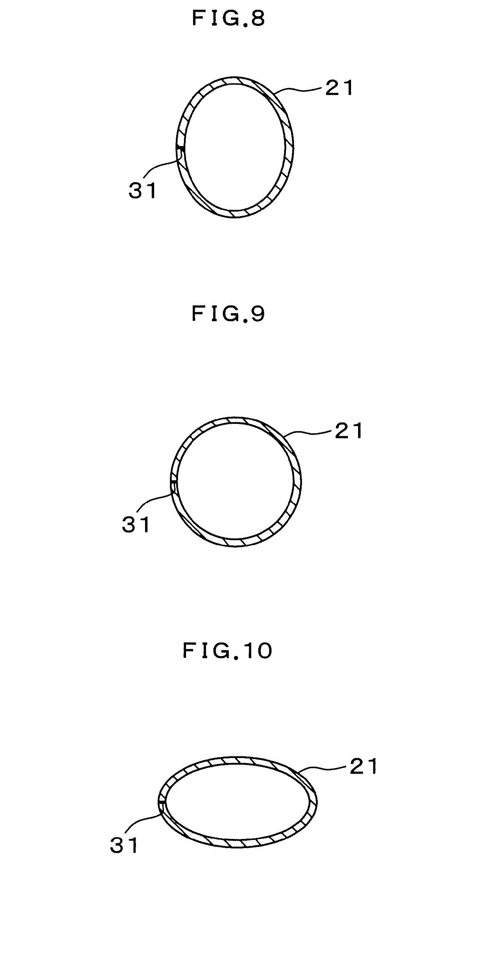

FIG 3 is a front view of the brake pedal 20, and FIG 4 is a right side view of the brake pedal 20. The arm member 21 that is the body of the brake pedal 20 is formed by bending and flattening a steel pipe, and an axis of the arm member 21 which is thus made of a steel pipe is shown by reference letter B in FIG 4. This axis B is a center line of the arm member 21 extending in a length direction of the arm member 21 through the center of the arm member 21. FIG 5 to FIG 10 show shapes of cross sections of the arm member 21 orthogonal to the axis B. FIG 5 is a cross-sectional view taken along a line S5-S5 in FIG 4, FIG 6 is a cross-sectional view taken along a line S6-S6 in FIG 4, FIG 7 is a cross-sectional view taken along a line S7-S7 in FIG 4, FIG 8 is a cross-sectional view taken along a line S8-S8 in FIG 4, FIG 9 is a cross-sectional view taken along a line S9-S9 in FIG 4, and FIG 10 is a cross-sectional view taken along a line S10-S10 in FIG 4 excluding the pad member 22.

As shown in FIG 5, at the proximal end portion 21A of the arm member 21, the cross-sectional shape of the arm member 21 is a shape that is elongated in a direction orthogonal to the lateral direction, that is, a vertical direction in FIG 5. At a position on the distal end 21B side beyond the middle portion 21D of the arm member 21 where the coupling member 8 of the push rod 7 explained with FIG 2 is coupled, the cross-sectional shape of the arm member 21 is an elliptic shape that is long in the direction orthogonal to the lateral direction as shown in FIG 6. As shown in FIG 7 and FIG 8, this elliptic shape continues further from the middle portion 21D to a position close to the distal end 21B, but the dimension in the direction orthogonal to the lateral direction gradually becomes smaller toward the distal end 21B. Conversely, the dimension in the lateral direction gradually becomes larger toward the distal end 21B. At a position before the distal end 21B, in other words, a position slightly back from the distal end 21B toward the side of the proximal end portion 21A, the cross-sectional shape of the arm member 21 is a circle as shown in FIG. 9. At the distal end 21B, as shown in FIG 10, the cross-sectional shape of the arm member 21 is a laterally long elliptic shape.

In other words, the dimension in the lateral direction of the arm member 21 gradually becomes larger than the dimension of the circle from the position before the distal end 21B toward the distal end 21B. On the contrary, the dimension in the direction orthogonal to the lateral direction of the arm member 21 gradually becomes smaller than the dimension of the circle from the position before the distal end 21B toward the distal end 21B.

Accordingly, at the distal end 21B and the vicinity of the distal end 21B, the cross-sectional shape orthogonal to the axis B of the arm member 21 is a laterally long shape. As shown in FIG. 4, the end face 21C of the distal end 21B to which the pad member 22 is attached is not at right angles to the axis B, and has an oblique angle to the axis B, but as shown in FIG 3, the end face 21C to which the pad member 22 is attached still has a laterally long shape.

Therefore, the dimension in the left and right direction of the end face 21C is larger than the dimension in the vertical direction that is a direction orthogonal to this left and right direction.

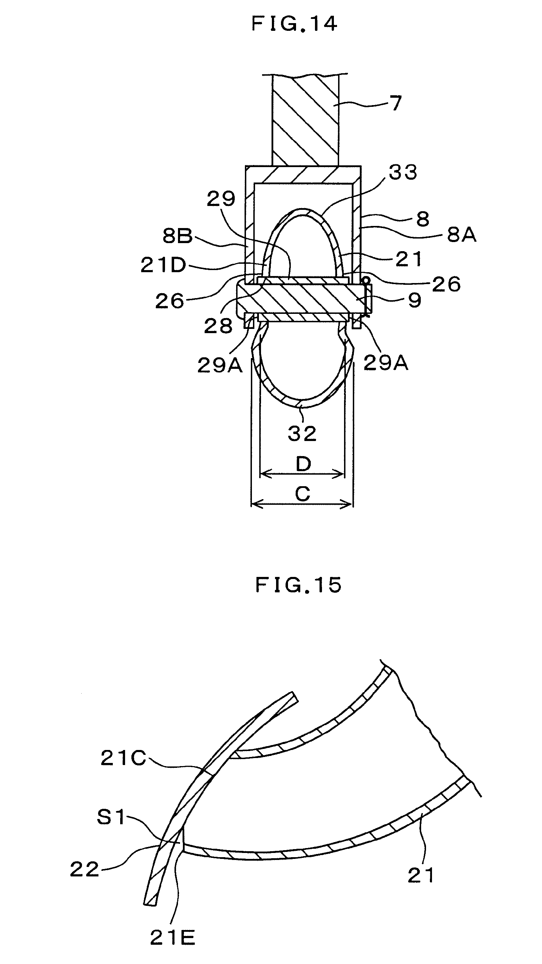

Further, as shown in FIG 4, a lower side portion 21E of the end face 21C has an inclined face stepping back from the pad member 22. Thus, the pad member 22 is not attached to the entire circumference of the end face 21C by welding, and a gap S1 (see FIG 15) is provided between the lower side portion 21E and the portion of the pad member 22 facing the lower side portion 21E within the entire circumference of the end face 21C. The pad member 22 is coupled by welding to the portion excluding the lower side portion 21E within the entire circumference of the end face 21C.

Further, as described above, at the proximal end portion 21A of the arm member 21, the cross-sectional shape of the arm member 21 is a shape elongated in the direction orthogonal to the lateral direction, and outer faces of both sides in the lateral direction, in other words, left and right outside faces 21F, 21G are flat faces as shown in FIG 5. Accordingly, the arm member 21 has flat outer face portions 26 formed of such outside faces 21F, 21G, and these flat outer face portions 26 extend from the proximal end portion 21A to positions slightly beyond the aforementioned middle portion 21D as can be seen in FIG 4. On the side view of the arm member 21 in FIG 4, width dimensions of the flat outer face portions 26, which are dimensions in a direction orthogonal to the axis B, gradually become smaller from a position before the middle portion 21D toward the side of the distal end 21B.

In the arm member 21, two holes 27, 28 are formed in the flat outer face portions 26. The hole 27 formed in the proximal end portion 21A is for allowing insertion of the aforementioned pipe member 23 therethrough, and this pipe member 23 projecting from the left and right outside faces of the arm member 21 is coupled by welding to these left and right outside faces across the entire circumference of the pipe member 23. Further, a bush member 29 is inserted and fixed in the hole 28 formed in the middle portion 21D, and this bush member 29 is for allowing insertion of the pin 9 to the inside for coupling the coupling member 8 of the aforementioned push rod 7 to the middle portion 21D (see also FIG 14).

Further, as shown in FIG 4, the aforementioned bracket 25 is coupled by welding to the flat outer face portions 26 of the arm member 21. This bracket 25 is formed of, as can be seen in FIG 3, a base portion 25A, a spring coupling portion 25B to which an end portion of the aforementioned return spring 10 is coupled, and a connecting portion 25C connecting the base portion 25A and the spring coupling portion 25B. The base portion 25A is coupled by welding to the flat outer face portion 26.

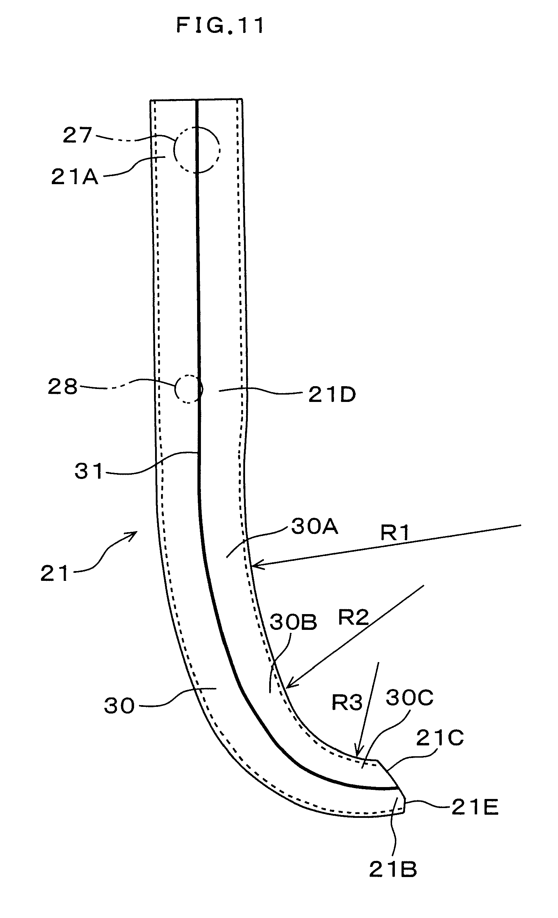

FIG 11 is a side view looking the arm member 21 just after produced from a material for arm member from the left side. The arm member 21 extends straight from the proximal end portion 21A to a position slightly beyond the middle portion 21D, and the portion from the position slightly beyond the middle portion 21D to the distal end 21B is a curved portion 30 which curves and projects toward the side of the operator of the vehicle. The curved portion 30 thus constituting a portion of the arm member 21 is formed by sequentially providing curved shape portions 30A, 30B, 30C with radii of curvature R1, R2, R3 having different sizes in the length direction of the arm member 21. The sizes of the radii of curvature R1, R2, R3 are such that a curved shape portion that is closer to the distal end 21B has a smaller radius of curvature, and the radius of curvature R3 of the curved shape portion 30C in the vicinity of the distal end including the distal end 21B is smallest among the radii of curvature R1, R2, R3.

Further, the offset amount A of the arm member 21 shown in FIG 3 is provided by deforming from a position beyond the middle portion 21D on the side of the distal end 21B to the distal end 21B in the lateral direction in a curved manner.

The aforementioned material for arm member is, as shown in FIG 11, a seam welded pipe with a seam welded portion 31 existing at one position in a circumferential direction. This seam welded pipe is produced by a seam welding method such that, for example, a strip rolled out from an uncoiler is formed into a pipe shape with a circular cross-sectional shape by roll forming, and end faces of both ends in a width direction of the strip facing each other are heated and pressure welded by, for example, high-frequency induction heating. After the end faces are coupled by pressure welding, the seam welded pipe is quenched with cooling water.

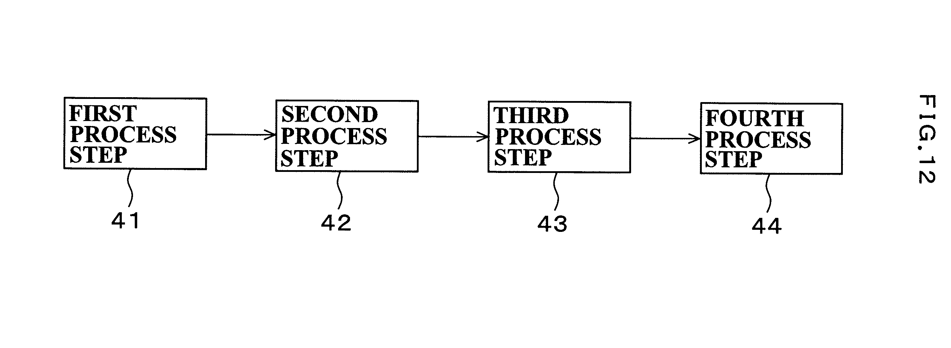

FIG 12 shows process steps for producing the arm member 21 from the material for arm member. In a first process step 41, there is performed a process to bend the aforementioned material for arm member made of a seam welded pipe in the vertical direction, thereby performing a work to form a curved portion in the material for arm member that is substantially the same as the curved portion 30 in FIG 11. In a second process step 42, there are performed a process to form the flat outer face portions 26 in FIG 4 on the material for arm member by flattening the material for arm member and a process to make a cross section orthogonal to the axis of the material for arm member in an elliptic shape as shown in FIG. 6 to FIG 8. Furthermore, in the second process step 42, there is also performed providing the offset amount A in the material for arm member by the shapes of upper and lower molds for performing the aforementioned flattening. In a third process step 43, there is performed bending to form the portion corresponding to the vicinity of the distal end including the distal end 21B of the material for arm member into the bending shape portion 30C with the radius of curvature R3. In a fourth process step 44, a process to cut both ends in the length direction of the material for arm member with a cutter is performed, thereby completing the arm member 21 with a desired length.

In addition, in the fourth process step 44, when the process to cut the both ends in the length direction of the material for arm member is performed, the inclined lower side portion 21E on the end face 21C of the aforementioned distal end 21B is formed simultaneously. This forming work is performed by providing a portion for forming the lower side portion 21E in the cutter for cutting the end face 21C, and moving this cutter in a left and right direction in FIG 3.

After the arm member 21 is produced from the material for arm member as above, a work to form the holes 27, 28 shown in FIG 4 in the arm member 21 is performed. Incidentally, these holes 27, 28 may be formed by piercing the material for arm member during the aforementioned flattening in the second process step 42 in FIG 12.

As works thereafter, there are performed a work to insert the pipe member 23 in the hole 27 of the arm member 21 and couple the arm member 21 and the pipe member 23 by welding, a work to couple the pad member 22 to the end face 21C of the distal end 21B of the arm member 21 by welding, and further a work to couple the base portion 25A of the bracket 25 to the flat outer face portion 26 of the arm member 21 by welding. Then a work to electropaint the brake pedal 20 is performed by immersing the brake pedal 20 produced through these works in an electropaint. Next, works necessary for mounting the brake pedal 20 in a vehicle are performed, such as a work to insert and fix the aforementioned bush member 29 in the hole 28.

As described above, the material for arm member is the seam welded pipe in which the seam welded portion 31 exists at one position in the circumferential direction. Accordingly, also in the arm member 21, the seam welded portion 31 at one position exists in a cross section orthogonal to the aforementioned axis B. This seam welded portion 31 is continuous across the entire length of the arm member 21.

This seam welded portion 31 exists at a position on a lateral side of the arm member 21 in the cross section orthogonal to the axis B of the arm member 21, as shown in FIG 5 to FIG 10.

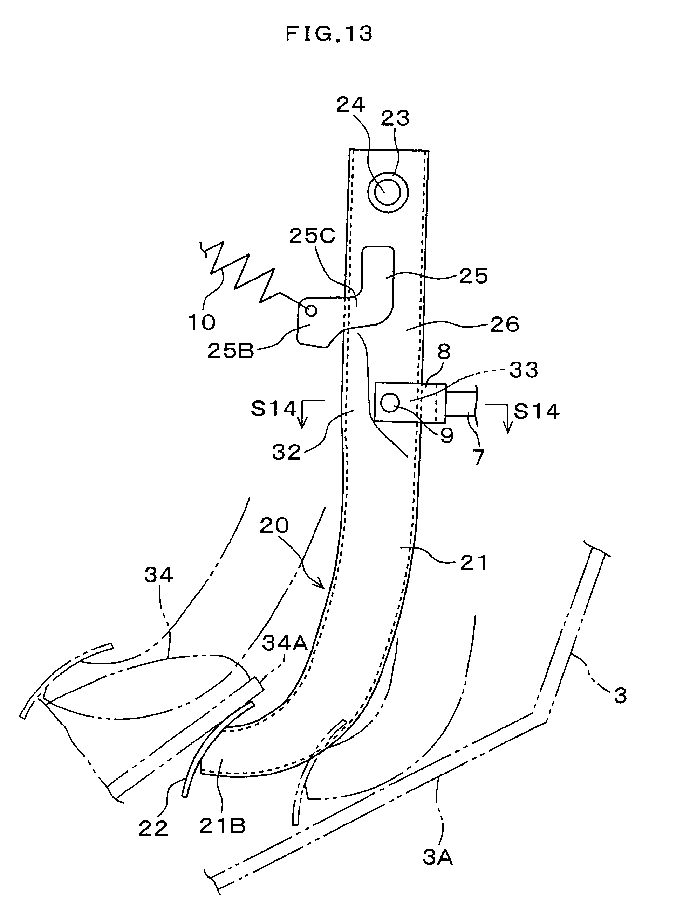

FIG 13 is a right side view showing the brake pedal 20 when mounted in a vehicle, and FIG 14 is a cross-sectional view taken along a line S14-S14 in FIG 13. As shown in this FIG 14, the aforementioned middle portion 21D of the arm member 21 is inserted in the coupling member 8 having a substantially C shape provided on the end portion of the aforementioned push rod 7, and the pin 9 provided across the both left and right side portions 8A, 8B of the coupling member 8 is inserted through the inside of the bush member 29 inserted and fixed in the hole 28 of the middle portion 21D. This pin 9 couples the arm member 21 and the coupling member 8. The arm member 21 has a projecting portion 32 projecting from the coupling member 8 in a cross section orthogonal to the aforementioned axis B of the arm member 21 in the middle portion 21D, and a dimension C in the lateral direction of this projecting portion 32 is larger than a dimension D in the lateral direction of a portion 33 of the arm member 21 inserted in the coupling member 8.

Specifically, an inner face of the coupling member 8 faces the flat outer face portion 26 of the arm member 21 explained with FIG 4, and an outer face of the projecting portion 32 is a curved face expanding and projecting laterally from the flat outer face portion 26. This curved face changes sequentially to the curved face of the outer face of the arm member 21 shown in FIG 5 to FIG 10.

Further, as shown in FIG 14, both end portions 29A of the bush member 29 inserted and fixed in the hole 28 project from the left and right outside faces of the arm member 21. In other words, the length of the bush member 29 is slightly longer than the dimension in the lateral direction of the arm member 21 at the position of the hole 28.

When the operator brakes a traveling vehicle, as shown in FIG 13, the operator performs a stepping operation on the pad member 22 of the brake pedal 20 with a footwear item 34 worn on the foot. In this embodiment, as shown in FIG 3, the end face 21C of the distal end 21B of the arm member 21 to which the pad member 22 is attached has a laterally long shape. Thus, even when the stepping operation is performed at a position shifted in the lateral direction from a center position E of the pad member in the lateral direction, stepping force can be transmitted effectively from the pad member 22 to the arm member 21.

Further, the pad member 22 is attached to the end face 21C of the arm member 21 having a laterally long shape, and an attaching width dimension of the pad member 22 in the lateral direction on the arm member 21 is large. Thus the pad member 22 can be attached to the arm member 21 with high strength. Accordingly, it is possible to reduce the thickness of the pad member 22, which allows reduction in weight of the entire brake pedal 20 and further allows reduction in vehicle weight.

Moreover, when a stepping operation is performed on the brake pedal 20 by the footwear item 34 as shown in FIG 13, a tip 34A of the footwear item 34 gets closer to the vicinity of the distal end 21B of the arm member 21 as this stepping stroke becomes longer. However, in this embodiment, the end face 21C of the distal end 21B of the arm member 21 to which the pad member 22 is attached has a laterally long shape, and the shape of a cross section orthogonal to the axis B of the arm member 21 in the vicinity of the distal end 21B is also a laterally long shape. Thus, when the stepping stroke of the brake pedal 20 becomes long, interference of the tip 34A of the footwear item 34 with the vicinity of the distal end 21B can be eliminated. That is, when the shape of the cross section orthogonal to the axis B of the arm member 21 in the vicinity of the distal end 21B is not a laterally long shape, for example, when it is a circle shape or a vertically long shape, the dimension in the direction orthogonal to the lateral direction in the vicinity of the distal end 21B becomes larger than that when it is a laterally long shape. Thus, there arises a possibility that the tip 34A of the footwear item 34 interferes with the vicinity of the distal end 21B. However, since the shape of the cross section orthogonal to the axis B of the arm member 21 in the vicinity of the distal end 21B is a laterally long shape similarly to the end face 21C as in this embodiment, interference of the tip 34A of the footwear item 34 with the vicinity of the distal end 21B can be eliminated even when the stepping stroke of the brake pedal 20 becomes long.

Further, in this embodiment, as shown in FIG 3, the center position of the end face 21C in the lateral direction matches the center position E of the pad member 22 in the lateral direction. Accordingly, stepping force can be transmitted effectively from the pad member 22 to the arm member 21 even when the stepping operation is performed at a position shifted to either side in the lateral direction from the center position E of the pad member 22 in the lateral direction, in other words, shifted to either a right side or a left side.

Further, in this embodiment, the pad member 22 is not coupled across the entire circumference of the end face 21C, and the gap S1 shown in FIG 4 and FIG 15 is provided between a part of the entire circumference of the end face 21C and the pad member 22. Moreover, a hollow portion in the arm member 21 made of the pipe is continuous across the entire length of the arm member 21. Thus, even after the pad member 22 is attached to the end face 21C, the aforementioned hollow portion is open by the gap S1 at both end portions of the arm member 21 in the length direction. Accordingly, when the brake pedal 20 is immersed in an electropaint for electropainting the brake pedal 20, the electropaint can enter the inside of the arm member 21 and be distributed therein securely, and this allows to electropaint the entire inner face of the arm member 21.

As shown in FIG 15 that is a cross-sectional view taken along a line S15-S15 in FIG 3, the aforementioned gap S1 is formed by making the lower side portion 21E of the end face 21C as an inclined face stepping back from the pad member 22. Accordingly, when the brake pedal 20 is attached in a vehicle and dew condensation occurs in the arm member 21, water due to this dew condensation can be allowed to flow out by itself through the lower side portion 21E of the end face 21C of the distal end 21B of the arm member 21. Thus, rusting on the inner face of the arm member 21 formed of a steel pipe can be prevented.

Furthermore, in this embodiment, the shape of the end face 21C is a cut shape when the arm member 21 is produced, which is given a desired length by cutting the aforementioned material for arm member with a cutter. Accordingly, when the arm member 21 is produced by cutting the material for arm member with a cutter, the aforementioned end face 21C which allows to provide the gap S1 from the pad member 22 can be formed simultaneously. Thus the production work of the arm member 21 can be simplified.

Further, on the proximal end portion 21A of the arm member 21 in which the aforementioned center shaft 24 is arranged, the shape of the cross section orthogonal to the axis B of the arm member 21 is a shape elongated in the direction orthogonal to the lateral direction, as explained with FIG 5. When a stepping operation is performed on the pad member 22, a bending moment operates on the arm member 21, and this bending moment becomes maximum at the proximal end portion 21A of the arm member 21 in which the center shaft 24 is arranged, which is the center of rotation of the arm member 21. However, the shape of a cross section orthogonal to the axis B of the arm member 21 on this proximal end portion 21A is a shape elongated in the direction orthogonal to the lateral direction, and thus high strength against the aforementioned maximum bending moment can be given to the arm member 21.

Furthermore, in this embodiment, the cross-sectional shape of the arm member 21 elongated in the direction orthogonal to the lateral direction is continuous across the range of length from the proximal end portion 21A of the arm member 21, including the position of the middle portion 21D of the arm member 21 whose cross-sectional shape is shown in FIG 14, to just before the position whose cross-sectional shape is shown in FIG 9. Accordingly, strength that can sufficiently counter a large bending moment can be given also to this range of length of the arm member 21.

Further, in this embodiment, as shown in FIG 3, the arm member 21 has the offset amount A of shifting the position of the distal end 21B in the lateral direction from the position of the proximal end portion 21A, and this offset amount A causes a twisting moment to operate on the arm member 21 when a stepping operation is performed on the pad member 22. However, as illustrated in FIG 14, the arm member 21 of this embodiment has the projecting portion 32 projecting from the coupling member 8 in a cross section orthogonal to the axis B in the middle portion 21D to which the coupling member 8 of the push rod 7 is coupled. Since the dimension C in the lateral direction of this projecting portion 32 is larger than the dimension D in the lateral direction of the portion 33 of the arm member 21 inserted in the coupling member 8, strength against the above-described twisting moment is given to the arm member 21 at the projecting portion 32. Accordingly, it is possible to prevent the arm member 21 from being twisted and deformed.

Moreover, as explained with FIG 14, the bush member 29 is inserted through the hole 28 of the middle portion 21D to which the coupling member 8 of the push rod 7 is coupled, and the both end portions 29A of this bush member 29 project from the left and right outside faces of the arm member 21. Thus, it is possible to prevent the occurrence of a situation in which the bush member 29 falls into the arm member 21 by the above-described twisting moment operated on the middle portion 21D. Also by the bush member 29, which is thus arranged continuously in a predetermined position, strength against the above-described twisting moment can be given to the arm member 21.

Further, by the both end portions 29A of the bush member 29 projecting from the left and right outside faces of the arm member 21, it is possible to prevent the occurrence of rotational friction between the arm member 21 and the inner face of the coupling member 8 when the arm member 21 rotates about the center shaft 24 by a stepping operation on the pad member 22, thereby ensuring smooth rotation of the arm member 21.

Furthermore, as shown in FIG 14, by providing gaps between the both end portions 29A of the bush member 29 and the inner face of the coupling member 8, it is possible to prevent the occurrence of rotational friction between the bush member 29 fixed to the arm member 21 and the coupling member 8 when the arm member 21 rotates about the center shaft 24 by a stepping operation on the pad member 22.

Further, the end face 21C of the distal end 21B of the arm member 21 to which the pad member 22 is coupled has a laterally long shape as described above, and this laterally long shape continues from the distal end 21B to almost the position of the arm member 21 whose cross-sectional shape is shown in FIG 9. Thus, it is possible to give strength that can counter the above-described twisting moment also to this range of length of the arm member 21.

Furthermore, as can be seen from FIG 13, when the stepping stroke of the brake pedal 20 is made long, the distal end 21B of the arm member 21 and the vicinity of this distal end 21B get close to an inclined portion 3A inclining upward to the front side of the aforementioned dashboard panel 3. However, cross-sectional shapes orthogonal to the axis B at the distal end 21B and in the vicinity of the distal end 21B are a laterally long shape, and the dimensions in the direction orthogonal to the lateral direction at these cross sections are small. Thus, a sufficiently long stepping stroke of the brake pedal 20 until getting close to the inclined portion 3A can be secured.

Further, in this embodiment, as explained in FIG. 11, the portion of the arm member 21 from the position slightly beyond the middle portion 21D to the distal end 21B is the curved portion 30 projecting in a curved manner to the side of the operator of the vehicle. This curved portion 30 is formed by providing the curved shape portions 30A, 30B, 30C with the radii of curvature R1, R2, R3 of different sizes in the length direction of the arm member 21, and the radius of curvature R3 of the curved shape portion 30C in the vicinity of the distal end including the distal end 21B is smallest among the radii of curvature R1, R2, R3. Accordingly, the position of the pad member 22 attached to the end face 21C of the distal end 21B is a position projecting largely to the side of the operator. Therefore, even when the operator places the footwear item 34 on the pad member 22 in a state that the tip 34A of the footwear item 34 in FIG. 13 is projected upward and forward from the pad member 22 for performing a stepping operation on the brake pedal 20 with large force, it is possible to prevent the tip 34A of the footwear item 34 from contacting the arm member 21.

In other words, since the radius of curvature R3 of the curved shape portion 30C of the vicinity of the distal end including the distal end 21B is smallest among the radii of curvature R1, R2, R3 of the plurality of curved shape portions 30A, 30B, 30C, the space for eliminating interference of the tip 34A of the footwear item 34 with the arm member 21 can be secured on an upper forward side of the pad member 22.

Furthermore, in this embodiment, since the end face 21C of the distal end 21B of the arm member 21 is a laterally long shape, the work to bend the curved shape portion 30C of the vicinity of the distal end including the distal end 21B with the small radius of curvature R3 can be performed easily in the third process step 43 among the work steps explained in FIG 12.

Further, the bracket 25 to which the end portion of the return spring 10 is coupled is attached to the arm member 21, and the portion of the arm member 21 to which the base portion 25A of the bracket 25 explained with FIG 3 is coupled by welding is the flat outer face portion 26 explained with FIG 4 which is flat. Thus, it is not necessary to form the base portion 25A in a special shape such as a curve, and a welding work of the base portion 25A to the arm member 21 can be performed easily.

Furthermore, in this embodiment, the position of the seam welded portion 31 of the arm member 21 formed of the seam welded pipe is the position on the lateral side of the arm member 21, as shown in FIG 5 to FIG 10, in the cross section orthogonal to the axis B of the arm member 21. When the position of the seam welded portion is, unlike this embodiment, a position in the direction orthogonal to the lateral direction, for example, a position F or a position G of the arm member 21 in FIG 5 in the cross section orthogonal to the axis B of the arm member 21, the bending moment operating on the arm member 21 when a stepping operation is performed on the pad member 22 turns to large tensile force to operate on the arm member 21 at the position F, and meanwhile, it turns to large compression force to operate on the arm member 21 at the position G

In this embodiment, in contrast, the position of the seam welded portion 31 is at the position on the lateral side in the cross section orthogonal to the axis B of the arm member 21. This position is just on a lateral side or substantially just on a lateral side of the axis B and matches a neutral axis on which the magnitudes of the aforementioned tensile force and compression force become zero, or is a position close to a neutral axis on which the magnitudes of the aforementioned tensile force and compression force become quite small. Thus, it is possible to prevent loads of the large tensile force and compression force based on the aforementioned bending moment from operating on the seam welded portion 31.

Saying it differently, when the seam welded pipe is produced, a strip that is a material for this pipe is heated and quenched as described above, and accordingly a distortion exists in the seam welded portion due to hardening. This distortion is a disadvantage with respect to the large tensile force and compression force. Accordingly, when the position of the seam welded portion is at the position F or the position G in FIG 5 where the large tensile force or compression force operates, a work to anneal the seam welded pipe must be performed.

In this embodiment, in contrast, the position of the seam welded portion 31 is at the position on the lateral side in the cross section orthogonal to the axis B of the arm member 21 and at the position where the loads of the large tensile force and compression force based on the bending moment do not operate, and thus the work to anneal the seam welded pipe is not necessary. Accordingly, simplification of the works to produce the arm member 21 can be achieved, and the number of work steps can be reduced.

Note that the position of the seam welded portion 31 does not always have to exist at the same positions on the lateral side of the arm member 21 in the respective cross sections orthogonal to the axis B of the arm member 21. For example, when the various process works explained with FIG. 12 are performed, even if the position of the seam welded portion 31 is shifted from a predetermined position on the lateral side in a cross section orthogonal to the axis B of the arm member 21 in the entire length or a part of the length of the arm member 21, the amount of this shift is suppressed to a small amount, and thereby the arm member 21 has strength that can sufficiently counter the loads of the large tensile force and compression force based on the aforementioned bending moment.

Further, when the above-described process to bend the material for arm member in the vertical direction in the first process step 41 and the third process step 43 in FIG 12 is performed, this bending process causes large tensile force to operate on a bending outside portion that is a tensile side of the material for arm member, and causes large compression force to operate on a bending inside portion that is a compression side. However, in the arm member 21, as in this embodiment, the position of the seam welded portion 31 is a position on the lateral side in the cross section orthogonal to the axis B of the arm member 21, and thereby the position of the seam welded portion when the process to bend the material for arm member made of the seam welded pipe in the vertical direction is performed in the first process step 41 and the third process step 43 in FIG 12 is a position on the lateral side in the cross section orthogonal to the axis of the material for arm member in the portion of the material for arm member that is processed to be bent. Accordingly, it is possible to prevent the loads of the large tensile force and compression force from operating on the seam welded portion of the material for arm member. This allows to perform the process for bending the material for arm member in the vertical direction in a predetermined way.

Further, in this embodiment, as shown in FIG 11, the hole 27 provided in the arm member 21 for allowing insertion of the aforementioned pipe member 23 therethrough is formed crossing the seam welded portion 31, and then the pipe member 23 inserted through the hole 27 is coupled by welding across the entire circumference of the pipe member 23 on the left and right outside faces of the arm member 21 in a cross section orthogonal to the axis B of the arm member 21. Thus, the pipe member 23 arranged crossing the seam welded portion 31 is coupled to the arm member 21, resulting in that the coupling portion of the pipe member 23 and the arm member 21 exists on both sides of the seam welded portion 31.

Accordingly, the both side portions of the seam welded portion 31 in the arm member 21 are coupled via the pipe member 23, and this coupling improves the strength of the arm member 21 formed of the seam welded pipe.

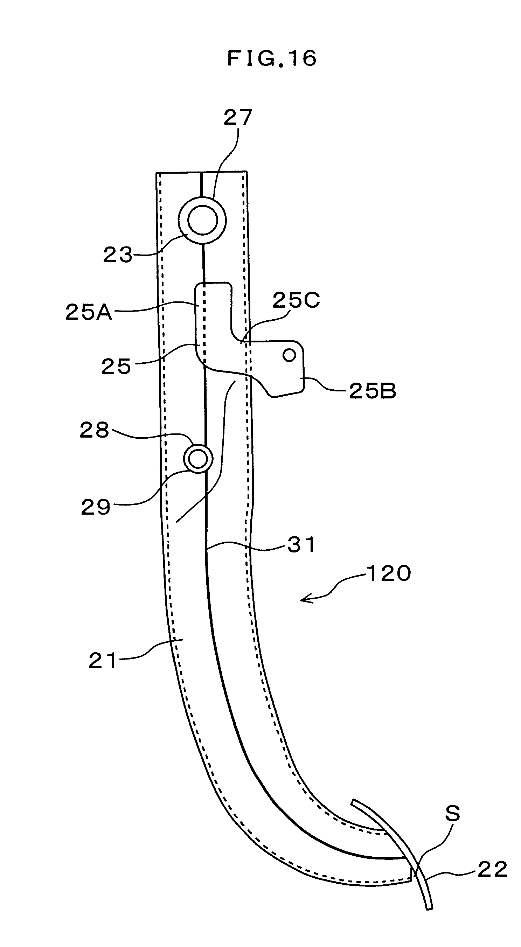

FIG 16 is a side view looking a brake pedal 120 according to a first different embodiment from the left side. In this brake pedal 120, the attachment position of the bracket 25 for coupling the end portion of the return spring 10 on the arm member 21 is bilaterally inverted as compared to the brake pedal 20 of the above-described embodiment. That is, on the brake pedal 20 of the above-described embodiment, the bracket 25 is attached to the outside face on the right side of the arm member 21, but on the brake pedal 120 in this embodiment, the bracket 25 is attached to the outside face on a left side of the arm member 21. Moreover, the base portion 25A of the bracket 25 coupled by welding to the arm member 21 is arranged crossing the seam welded portion 31. The base portion 25A is coupled to the arm member 21 by welding across the entire circumference of the portion in contact with the arm member 21, and this results in that the coupling portion of the bracket 25 and the arm member 21 exists on the both sides of the seam welded portion 31.

Thus, according to this embodiment, the both sides of the seam welded portion 31 on the arm member 21 are coupled not only by the pipe member 23 but also by the bracket 25, and accordingly, the strength of the arm member 21 improves further.

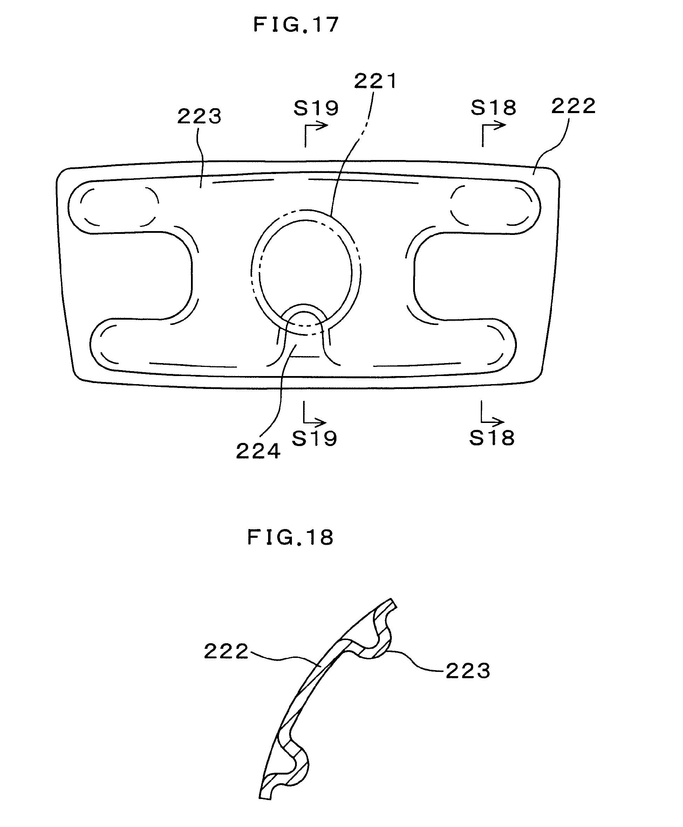

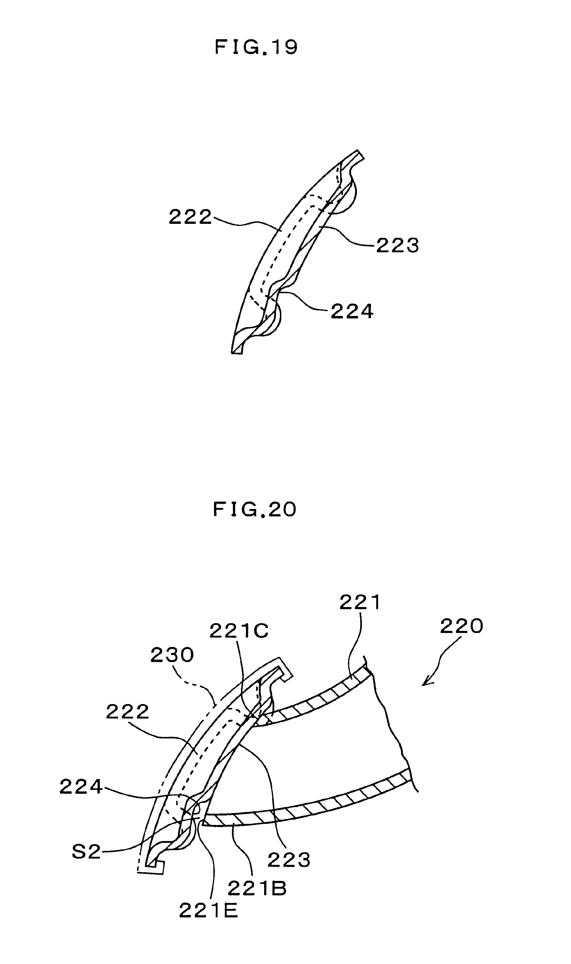

FIG. 17 is a view showing a pad member 222 used on a brake pedal 220 according to a second different embodiment, and is a rear view looking this pad member 222 from an arm member 221 (see FIG. 20). FIG 18 is a cross-sectional view taken along a line S18-S18 in FIG. 17, and FIG 19 is a cross-sectional view taken along a line S19-S19 in FIG 17. The pad member 222 is formed by press forming a plate material made of metal. During this press forming, a protruding portion 223 protruding to the side of the arm member 221 is formed in the pad member 222, and this protruding portion 223 has a substantially H shape rolled over 90 degrees as shown in FIG. 17. Thus, the protruding portion 223 is a reinforcement portion of the pad member 222 that is a press formed product of a plate material.

Further, as shown in FIG 17, in the middle in a left and right direction of the protruding portion 223 having the substantially H shape rolled over 90 degrees and on a lower side of the protruding portion 223, there is formed a recessed portion 224 recessed to a side opposite to the arm member 221. When the pad member 222 is formed by press forming a plate material, this recessed portion 224 as a portion recessed to the side opposite to the arm member 221 relative to the protruding portion 223 is formed simultaneously by this press forming, similarly to the protruding portion 223. As shown in FIG. 20, when the pad member 222 is attached by welding to an end face 221C of a distal end 221B of the arm member 221, the position of a lower side portion 221E and the position of the recessed portion 224 are matched within the entire circumference of the end face 221, in other words, the lower side portion 221E is arranged in the recessed portion 224, and the remaining portion of the end face 221C is attached by welding to the protruding portion 223.

Accordingly, similarly to the embodiment shown with FIG 4 and FIG. 15, the gap S2 is provided between a part of the entire circumference of the end face 221C and the pad member 222. Further, this gap S2 is provided between the lower side portion 221E within the entire circumference of the end face 221C and a portion of the pad member 222 that faces this lower side portion 221E.

Incidentally, as shown in FIG 20, a surface of the pad member 222 on the side opposite to the side of the arm member 221 is covered with, for example, a cover member 230 made of synthetic resin.

According to this embodiment, when the pad member 222 is formed by press forming a plate material made of metal, the recessed portion 224 for forming the gap S2 can be formed simultaneously by this press forming. Thus, the work to provide the gap S2 in the brake pedal 220 can be performed easily.

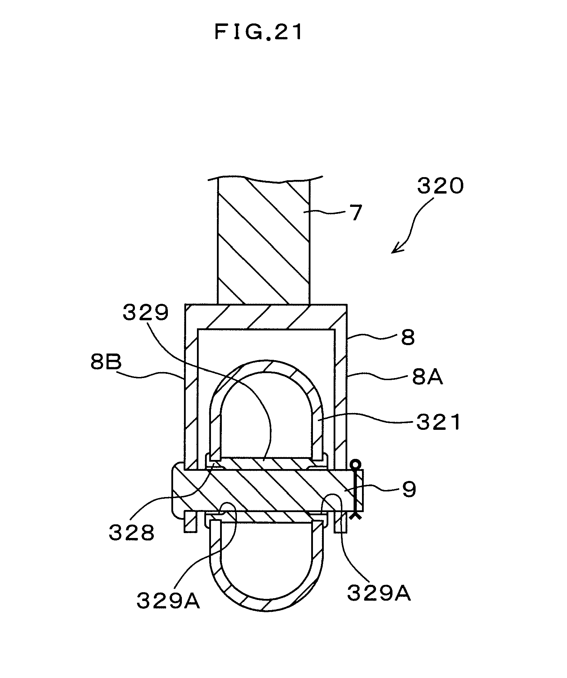

FIG. 21 shows a cross-sectional view of a portion of an arm member 321 inserted in the aforementioned coupling member 8 in a substantially C shape in a brake pedal 320 according to a third different embodiment. Also in the arm member 321 according to this embodiment, a hole 328 is formed in the portion corresponding to the portion where the coupling member 8 is arranged, and a bush member 329 is inserted through this hole 328. The bush member 329 is fixed to the arm member 321 by caulking on both ends. Further, similarly to the embodiment shown in FIG 14, the pin 9 is inserted through the inside of the bush member 329, and this pin 9 provided across the both left and right side portions 8A, 8B of the coupling member 8 couples the arm member 321 and the coupling member 8.

Further, in this embodiment, on an inner face of the bush member 329 that faces the pin 9, depressed portions 329 having a ring shape depressed in an outside diameter direction are formed in both end portions in a length direction of this bush member 329.

When the operator operates the pad member by stepping with a foot, a twisting moment operates on the arm member 321 if this stepping operation is not performed at the position corresponding to a center portion on an end face of a distal end of the arm member 321 but is performed at a position shifted in either leftward or rightward from this position. Further, also when the brake pedal 320 has the offset amount A shown in FIG 1, a twisting moment operates on the arm member 321 by a stepping operation on the pad member. However, as described above, in the inner face of the bush member 329 facing the pin 9, the depressed portions 329A having a ring shape depressed in the outside diameter direction formed in the both end portions in the length direction of the bush member 329 allow occurrence of a displacement in a twisting direction of the arm member 321 between the pin 9 and the bush member 329. Thus, even when the twisting moment operates on the arm member 321, the stepping force form the arm member 321 via the pad member is securely transmitted to the aforementioned push rod 7, to which the coupling member 8 is coupled to its end portion, via the bush member 329, the pin 9 and the coupling member 8 having a substantially C shape.

### Industrial Availability

The present invention can be used for a pedal for vehicle such as a brake pedal or a clutch pedal on which a stepping operation is performed by the foot of an operator.

## Claims

1. A pedal for vehicle comprising an arm member vertically rotatable about a center shaft arranged in a proximal end portion and a pad member attached to an end face of a distal end of the arm member, the arm member being made of a pipe,
wherein the end face to which the pad member is attached has a laterally long shape.

2. The pedal for vehicle according to claim 1, wherein a center position of the end face in a lateral direction matches or substantially matches a center position of the pad member in the lateral direction.

3. The pedal for vehicle according to claim 1, wherein a gap is provided between a part of an entire circumference of the end face and the pad member.

4. The pedal for vehicle according to claim 3, wherein the gap is provided between a lower side portion of the entire circumference of the end face and a portion of the pad member that faces the lower side portion.

5. The pedal for vehicle according to claim 3, wherein the gap is provided by cutting a part of the entire circumference of the end face.

6. The pedal for vehicle according to claim 5, wherein cutting of the part of the entire circumference of the end face is performed when the arm member is produced by cutting a material for arm member.

7. The pedal for vehicle according to claim 3, wherein a recessed portion recessed toward a side opposite to the arm member is formed in the pad member, and the gap is formed by the recessed portion by arranging the part of the entire circumference of the end face in the recessed portion.

8. The pedal for vehicle according to claim 7, wherein a protruding portion protruding toward a side of the arm member is formed on the pad member, the recessed portion being a portion recessed toward the side opposite to the arm member with respect to the protruding portion, and a portion excluding the part of the entire circumference of the end face is coupled to the protruding portion.

9. The pedal for vehicle according to claim 8, wherein the pad member is formed by press forming a plate material, and the protruding portion is a reinforcement portion of the pad member.

10. The pedal for vehicle according to claim 1, wherein a shape of a cross section orthogonal to an axis of the arm member in the proximal end portion of the arm member is a shape elongated in a direction orthogonal to a lateral direction.

11. The pedal for vehicle according to claim 1, wherein the arm member has an offset amount of offsetting a position of the distal end in a lateral direction from a position of the proximal end portion, a middle portion between the proximal end portion and the distal end of the arm member is inserted in a coupling member having a substantially C shape provided on an end portion of a rod and is coupled to the coupling member, the arm member has a projecting portion projecting from the coupling member in a cross section orthogonal to an axis of the arm member in the middle portion, and the projecting portion has a dimension in the lateral direction larger than a portion of the arm member inserted in the coupling member.

12. The pedal for vehicle according to claim 1, wherein a portion of an entire length of the arm member including at least the distal end is a curved portion projecting in a curved manner to a side of an operator, the curved portion is formed by providing a plurality of curved shape portions having different radii of curvature in a length direction of the arm member, and the radius of curvature of a curved shape portion in a vicinity of the distal end including the distal end is smallest among the respective radii of curvature of the plurality of curved shape portions.

13. The pedal for vehicle according to claim 1, wherein the arm member has a flat outer face portion that is a flat face, and a bracket to which an end portion of a return spring is coupled is coupled to the flat outer face portion.

14. The pedal for vehicle according to claim 1, wherein the arm member is made of a seam welded pipe in which a seam welded portion exists at one position in a circumferential direction of the arm member.

15. The pedal for vehicle according to claim 14, wherein a position of the seam welded portion is a position excluding a position in a direction orthogonal to a lateral direction in a cross section orthogonal to an axis of the arm member.

16. The pedal for vehicle according to claim 15, wherein the position of the seam welded portion is a position on a lateral side or a position close to this position in the cross section orthogonal to the axis of the arm member.

17. The pedal for vehicle according to claim 14, wherein a coupling member arranged crossing the seam welded portion is coupled to the arm member, and a coupling portion of the coupling member and the arm member exists on both sides of the seam welded portion.

18. The pedal for vehicle according to claim 17, wherein the coupling member is a pipe member in which the center shaft is inserted.

19. The pedal for vehicle according to claim 17, wherein the coupling member is a bracket to which an end portion of a return spring is coupled.

20. The pedal for vehicle according to claim 14, wherein the arm member is formed by performing a process of bending in a vertical direction or a substantially vertical direction a material for arm member made of a seam welded pipe, in which a seam welded portion exists at one position in a circumferential direction, and the position of the seam welded portion is a position on a lateral side or a position close to this position in the cross section orthogonal to the axis of the material for arm member in a portion of the material for arm member to be bent.

21. The pedal for vehicle according to claim 1, wherein a middle portion between the proximal end portion and the distal end of the arm member is inserted in a coupling member having a substantially C shape provided on an end portion of a rod, a bush member is penetrated through and fixed in the middle portion, a pin coupling the arm member and the coupling member is inserted in the bush member, and depressed portions having a ring shape depressed in an outside diameter direction are formed in both end portions in a length direction of the bush member in an inner face of the bush member facing the pin.

22. The pedal for vehicle according to claim 1, wherein the pedal for vehicle is a brake pedal.
